# DEMANDE DE BREVET EUROPEEN

(11) **EP 1 164 314 A1**
(43) Date de publication de la demande: **19.12.2001**
(21) Numéro de dépôt: 01401567.1
(22) Date de dépôt: 15.06.2001
(51) Int. Cl.: F16H 59/02, B60K 20/06

(54) **Commande de boîte de vitesses robotisée**

(30) Priorité: 16.06.2000 FR 0007703
(71) Demandeur: Renault, 92100 Boulogne Billancourt (FR)
(72) Inventeur: Marzolf, Dominique, 78800 Houilles (FR)

(57) **Abrégé**

Ce dispositif pour la commande au volant des changements de rapports d'une transmission d'une boîte de vitesses robitisée est du type comportant d'une part un bras radial (2) de commande portant une palette (4) de manipulation à une extrémité, susceptible d'être manoeuvrée d'un doigt pour basculer en arrière ou en avant autour d'un axe de basculement sensiblement parallèle au plan du volant, de manière à monter ou descendre les rapports de transmission, et d'autre part des moyens pour la commande des changements de position manoeuvrables d'un doigt et il est caractérisé en ce que le bras radial (2) est fixe et en ce que les moyens pour la commande des changements de position sont constitués par un organe mobile (11) disposé à l'extrémité du bras (2) à proximité dudit axe de basculement de manière à pouvoir être déplacé par un mouvement de translation d'un doigt

## Description

La présente invention concerne un dispositif pour la commande au volant des changements de rapports d'une transmission de véhicule automobile.

L'invention concerne plus précisément les changements de rapports d'une transmission comportant une boîte de vitesses mécanique à commande automatisée, aussi appelée boîte de vitesses robotisée. Dans celle-ci, il est nécessaire que le conducteur puisse sélectionner différents modes et positions de fonctionnement de la boîte, tels que par exemple une position de parcage (P), une position de marche arrière (R), une position neutre (N), une position dite automatique ou automatisée (D) dans lequel la transmission provoque automatiquement les changements de rapports de marche avant en fonction de différents paramètres de programmation, de fonctionnement et de roulage du véhicule, et un mode dit manuel (M) dans lequel le conducteur agit sur un organe de passage de rapports de marche avant qui transmet des impulsions électriques à la transmission du véhicule pour provoquer la montée ou la descente des rapports.

Il est souhaitable de réduite au minimum le nombre d'organes sur lesquels le conducteur doit agir manuellement, et de regrouper ces organes dans une zone accessible, à proximité du volant.

La Demanderesse a déjà proposé dans la demande de brevet français 99-04538 un dispositif pour la commande au volant des changements de rapports d'une transmission, comportant un levier de commande monté sur une double articulation à une de ses extrémités et portant une tête de manipulation à l'autre, susceptible d'être manoeuvrée pour pivoter parallèlement au plan du volant autour d'un axe de pivotement et pour basculer vers le volant ou en s'en éloignant autour d'un axe de basculement. Le pivotement de la tête sur sa trajectoire circulaire parallèle au plan du volant permet de sélectionner les positions P, R, N, D et le mode M, tandis que le basculement en avant ou en arrière est utilisé pour donner les impulsions de montée ou de descente des rapports. Le fait que la tête de manipulation puisse se déplacer selon deux directions, par basculement ou par pivotement, l'expose à des risques de confusion ou d'erreur pour peu que le mouvement des doigts ne soit pas orienté de manière très nette dans l'une ou l'autre de ces directions.

Le but de l'invention est de proposer un dispositif alternatif, présentant une bonne compacité et une bonne ergonomie.

L'invention atteint son but grâce à un dispositif pour la commande au volant des changements de rapports d'une transmission d'une boîte de vitesses robotisée, du type comportant d'une part un bras radial de commande portant une palette de manipulation à une extrémité, susceptible d'être manoeuvrée d'un doigt pour basculer en arrière ou en avant autour d'un axe de basculement sensiblement parallèle au plan du volant, de manière à monter ou descendre les rapports de transmission, et d'autre part des moyens pour la commande des changements de position manoeuvrables d'un doigt, caractérisé en ce que le bras radial est fixe et en ce que les moyens pour la commande des changements de position sont constitués par un organe mobile par rapport au bras et disposé à l'extrémité du bras à proximité dudit axe de basculement de manière à pouvoir être déplacé par un mouvement de translation d'un doigt. Il est ainsi possible de manoeuvrer les changements de position d'une manière très simple et par un mouvement bien différent de celui de la palette qui contrôle les rapports de sorte qu'il n'est pas possible de confondre ces mouvements.

De préférence, l'organe mobile est moleté et peut-être notamment une molette cylindrique, qu'il est alors avantageux de disposer pivotante sur un axe confondu avec ledit axe de pivotement. La molette peut être logée partiellement dans un espace compris entre l'extrémité du bras et la palette de manipulation, et dépasse partiellement à l'arrière du dispositif.

D'autres dispositions de molettes sont possibles ; par exemple, la molette peut être disposée sur un axe sensiblement parallèle au bras radial.

Quoique la molette présente l'avantage d'un encombrement réduit, quelle que soit sa position, d'autres organes déplaçables par translation d'un doigt sur une petite distance sont possibles, comme des tirettes ou des boutons moletés coulissants à l'extrémité du bras radial, parallèlement à celui-ci. Ces organes de petite taille permettent une manipulation d'un doigt tout en gardant la main sur le volant, et même avantageusement sur la palette.

Avantageusement, il est prévu un bouton de passage indépendant de mode manuel/automatique, et celui-ci est par exemple disposé sur l'axe de basculement, notamment quand la molette y est aussi située.

La palette est sensiblement égale ou inférieure à la taille d'une paume de main, de manière à faciliter sa préhension lorsque la main est sur le volant, et permettre à un doigt de manoeuvrer l'organe mobile.

La palette est conformée de manière ergonomique, avec un bord arrondi et de préférence orienté obliquement pour être sensiblement parallèle à la jante du volant dans le voisinage de la palette. La forme de la palette est de préférence choisie pour être dans la continuité du bras radial.

L'invention sera mieux comprise et d'autres avantages et caractéristiques seront mis en évidence à la lecture de la description suivante, se référant aux dessins annexés sur lesquels :
- la figure 1 est une vue de face du dispositif de commande conforme à l'invention ;
- la figure 2 est une vue de dessus du dispositif de la figure 1 ;
- la figure 3 est une vue en perspective de trois-quarts arrière du dispositif des figures 1 et 2 ;
- les figures 4 et 5 sont des vues analogues aux figures 1 et 2 d'une variante de réalisation.
- Les figures 6 et 7 sont des vues analogues à la figure 1 de deux autres variantes de réalisation.

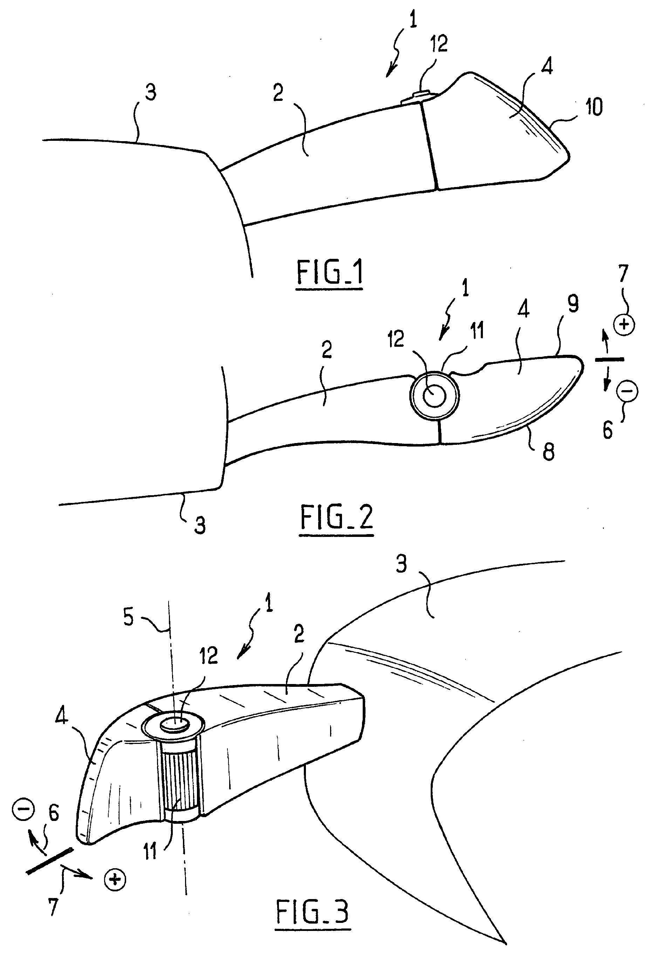

Les figures 1 à 3 montrent le dispositif 1 comportant un bras fixe radial 1 monté sur l'habillage 3 de la colonne de direction du véhicule, de manière à s'étendre latéralement, derrière le volant (non représenté) A l'extrémité du bras 2 est articulée une palette ou tête de manipulation 4 susceptible de pivoter autour d'un axe sensiblement vertical 5. Le pivotement en question est limité à une courte trajectoire angulaire en avant ou en arrière, comme suggéré par les flèches 6 et 7, suffisant pour donner les impulsions de descente ou de montée des rapports. La forme de la palette 4 est ergonomique et comporte par exemple une face convexe 8 à l'avant et une face plane ou légèrement concave 9 à l'arrière pour faciliter la poussée ou la traction à l'aide d'un seul doigt de la main sur le volant. D'autre part, le bord extrémal 10 de la palette 4 est inclinée parallèlement à la tangente à la jante du volant au voisinage de la palette, c'est-à-dire de préférence à l'emplacement idéal de la main du conducteur (en position 10h10).

Une molette cylindrique 11 est montée de manière à pouvoir pivoter sur le même axe 5, et se trouve partiellement logée entre le bras 2 et la tête 4, de sorte qu'elle ne dépasse qu'à l'arrière du dispositif 1 et peut être tournée à l'aide d'un doigt de la main posée sur le volant, du fait de la faible largeur de la tête 4. La molette 11 est connectée pour commander la sélection de la position (P, R, N, D).

Il est prévu au centre de la molette 11 un bouton 12 de sélection de mode (automatique/ manuel M).

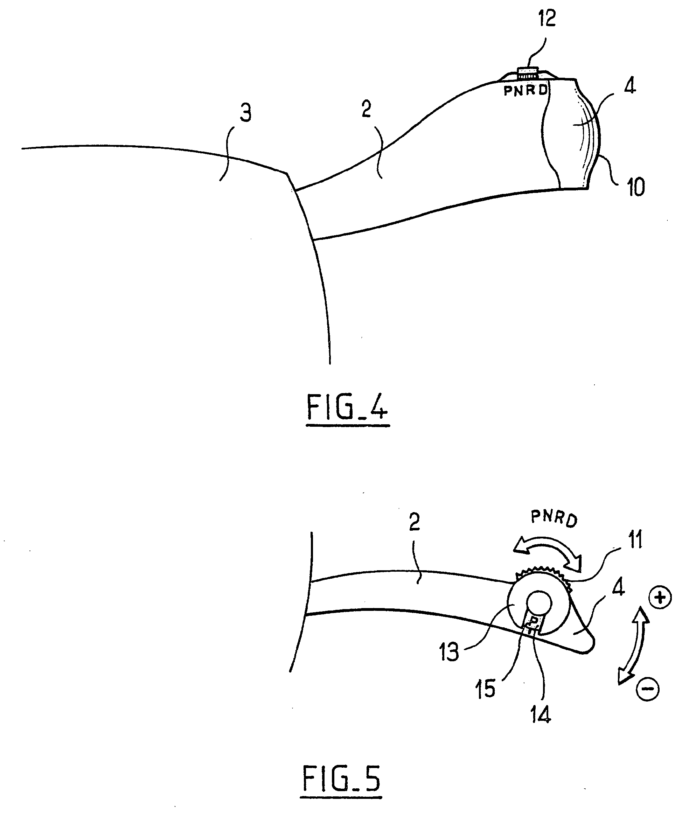

Dans la variante représentée sur les figures 4 et 5, le bord 10 de la palette 4 est conformé différemment, de manière plus arrondie. Par ailleurs, la molette 11 entraîne mécaniquement en rotation un disque portant des inscriptions 15 qui apparaissent au fur et à mesure de la rotation dans une échancrure 14 d'une collerette 13.

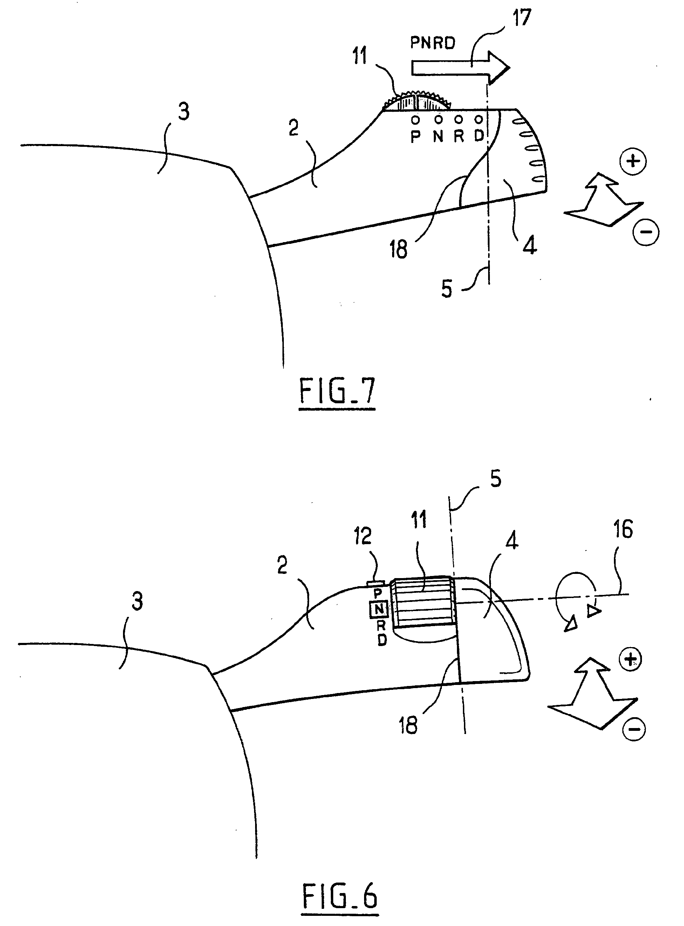

Dans la variante de la figure 6, la molette 11 est située à l'extrémité du bras 4, juste avant la palette 4, et elle a son axe de rotation 16 non plus confondu avec l'axe de basculement 5, mais sensiblement perpendiculaire à lui, c'est-à-dire sensiblement parallèle au bras radial 2.

Dans la variante de la figure 7, l'organe 11 n'est plus une molette mais un bouton moleté coulissant dans la direction 17 sensiblement parallèle au bras radial 2.

Le basculement en avant ou en arrière de la palette 4 n'a qu'une amplitude très faible, destinée à donner une impulsion de commande. De ce fait, le déplacement relatif entre la palette 4 et l'extrémité du bras 2, autour de l'axe de basculement 5, est très faible et permet d'adopter des formes très libres au niveau du bras et de la palette 4, celle-ci venant dans la quasi-continuité du bras, avec une zone de séparation 18 qui peut être maintenue très mince et avoir elle-même une forme très libre, comme le montrent les figures 6 et 7. Le cas échéant, cette zone 18 peut être prévue dans une matière élastique, ou couverte d'une telle matière.

## Revendications

1. Dispositif pour la commande au volant des changements de rapports d'une transmission, du type comportant d'une part un bras radial (2) de commande portant une palette (4) de manipulation à une extrémité, susceptible d'être manoeuvrée d'un doigt pour basculer en arrière ou en avant autour d'un axe de basculement (5) sensiblement parallèle au plan du volant, de manière à monter ou descendre les rapports de transmission, et d'autre part des moyens pour la commande des changements de position manoeuvrables d'un doigt, **caractérisé en ce que** le bras radial (2) est fixe et **en ce que** les moyens pour la commande des changements de position sont constitués par un organe mobile (11) disposé à l'extrémité du bras (2) à proximité dudit axe de basculement (5) de manière à pouvoir être déplacé par un mouvement de translation d'un doigt.

2. Dispositif selon la revendication 1, **caractérisé en ce que** l'organe mobile (11) est moleté.

3. Dispositif selon la revendication 2, **caractérisé en ce que** l'organe mobile (11) est une molette cylindrique.

4. Dispositif selon la revendication 3, **caractérisé en ce que** la molette cylindrique (11) est montée pivotante sur un axe confondu avec ledit axe de pivotement (5).

5. Dispositif selon la revendication 4, **caractérisé en ce que** la molette (11) est logée partiellement dans un espace compris entre l'extrémité du bras (2) et la palette de manipulation (4), et dépasse partiellement à l'arrière du dispositif.

6. Dispositif selon la revendication 3, **caractérisé en ce que** la molette (11) est disposée sur un axe (16) sensiblement parallèle au bras radial.

7. Dispositif selon la revendication 2, **caractérisé en ce que** l'organe moleté (11) est un bouton moleté se déplace par translation à l'extrémité du bras radial (2), parallèlement à celui-ci.

8. Dispositif selon l'une quelconque des revendications précédentes, **caractérisé en ce qu'**il est prévu un bouton (12) de passage de mode manuel/automatique.

9. Dispositif selon les revendications 8 et 4, **caractérisé en ce que** ledit bouton (12) est disposé sur l'axe de basculement (5).

10. Dispositif selon l'une quelconque des revendications précédentes, **caractérisé en ce que** la palette (4) est sensiblement de la taille d'une paume de main.
